# EUROPÄISCHE PATENTANMELDUNG

(11) **EP 0 913 310 A1**
(43) Veröffentlichungstag der Anmeldung: **06.05.1999**
(21) Anmeldenummer: 98119466.5
(22) Anmeldetag: 15.10.1998
(51) Int. Cl.: B62B 3/18

(54) **Stapelbarer Einkaufswagen**

(30) Priorität: 30.10.1997 DE 29719302 U
(71) Anmelder: WANZL METALLWARENFABRIK GMBH, D-89336 Leipheim (DE)
(72) Erfinder: Honold, Günther, 89340 Leipheim (DE)

(57) **Zusammenfassung**

Die Erfindung betrifft einen Einkaufswagen (1,1'), mit einem Fahrgestell (2), mit einem Korb (5) und mit einem außerhalb des Korbes (5) ortsfest angeordneten, zur Aufnahme von Flaschen (20) bestimmten Fach (13), das nach hinten über den Korbboden (10) hinausragt und zum Zwecke seiner Befestigung mit vorderen Befestigungsmitteln (17) ausgestattet ist, die mit dem Fahrgestell (2) verbunden sind und hintere Befestigungsmittel (14) aufweist, die zum weiteren Abstützen des Faches (13) bestimmt sind.
Es wird vorgeschlagen, den Korb (5) als Befestigungsstelle (19) für die hinteren Befestigungsmittel (14) des Faches (13) vorzusehen.

## Beschreibung

Die Erfindung betrifft einen stapelbaren Einkaufswagen, mit einem Fahrgestell, mit einem Korb und mit einem außerhalb des Korbes ortsfest angeordneten, zur Aufnahme von Flaschen bestimmten Fach, das nach hinten über den Korbboden hinausragt und zum Zwecke seiner Befestigung mit vorderen Befestigungsmitteln ausgestattet ist, die mit dem Fahrgestell verbunden sind und hintere Befestigungsmittel aufweist, die zum weiteren Abstützen des Faches bestimmt sind.

Zum nächstliegenden Stand der Technik zählt ein Einkaufswagen, der im deutschen Gebrauchsmuster 69 11 490.5 beschrieben ist. Bei dessen Fach zur Aufnahme von Flaschen sind die vorderen und die hinteren Befestigungsmittel an je einem die Längsseiten des Fahrgestelles verbindenden Querstab abgestützt und befestigt. Unterhalb des Korbes ist zusätzlich eine Ablage zum weiteren Abstellen von Gegenständen vorgesehen. Diese Ablage ist nicht immer erwünscht, da sie, unterhalb des Korbes gelegen, schlecht einsehbar ist und deshalb zum Zwecke des Ladendiebstahls missbraucht wird. Diese Erkenntnis hat zur Entwicklung von Einkaufswagen geführt, wie sie z.B. in der deutschen Patentschrift 31 01 844 C2 beschrieben sind. Diese Einkaufswagen vermeiden die unterhalb des Korbes befindliche Ablage und weisen an ihren Längsseiten zwei zum Fahrgestell gehörende, nach oben gekrümmte Holme auf, die durch Querstege verbunden sind, den Korb stützen und an ihren nach unten gerichteten Enden die Fahrrollen tragen.

Die Aufgabe der Erfindung besteht darin, bei einem Einkaufswagen der hier vorliegenden Art, für das Fach nach Befestigungsstellen zu suchen, die ein Ausstatten des Einkaufswagens mit nach oben gekrümmten Längsholmen erlauben, etwa so , wie in der deutschen Patentschrift 31 01 844 beschrieben.

Die Lösung der Aufgabe besteht darin, daß der Korb als Befestigungsstelle für die hinteren Befestigungsmittel des Faches vorgesehen ist.

Die vorgeschlagene Lösung erweist sich insbesondere dann als zweckmäßig, wenn der hintere untere Rand des Korbes als Befestigungsstelle für die hinteren Befestigungsmittel und ein die Längsseiten des Fahrgestelles verbindender Quersteg, der unmittelbar an der Unterseite angeordnet den Korb stützt, als Befestigungsstelle für die vorderen Befestigungsmittel des Faches vorgesehen sind. Bei dieser konstruktiven Lösung können gleiche Einkaufswagen platzsparend ineinandergeschoben werden, ohne dass die Längsholme der rückwärtig einzuschiebenden Einkaufswagen an die Befestigungsmittel des Faches des vorausbefindlichen Einkaufswagens anstoßen. Die vorgeschlagene Lösung läßt sich auch bei Einkaufswagen verwirklichen, wie sie im eingangs genannten deutschen Gebrauchsmuster beschrieben sind. Die Lösung ist ferner bei Einkaufswagen anwendbar, deren Fahrgestell aus einem unteren ebenen Rahmen mit seitlich nach oben gerichteten Trägern zum Tragen des Korbes ausgestattet sind. Schließlich besteht ein weiterer Vorteil der Erfindung darin, dass das Fach mit seinen Befestigungsmitteln jederzeit auch nachträglich an Einkaufswagen der hier vorliegenden Art angebracht werden kann, da die aus Draht bestehenden Befestigungsmittel mit ihren Enden einfach um den Quersteg und um den hinteren unteren Rand des Korbes gebogen werden müssen, um das Fach ortsfest an einem Einkaufswagen befestigen zu können.

Die Erfindung wird anhand von Ausführungsbeispielen näher beschrieben. Es zeigt
Fig. 1 einen Einkaufswagen mit einem Fach zur Aufnahme von Flaschen;
Fig. 2 den gleichen Einkaufswagen in teilweise geschnittener Seitenansicht sowie
Fig. 3 zwei ineinandergeschobene Einkaufswagen.

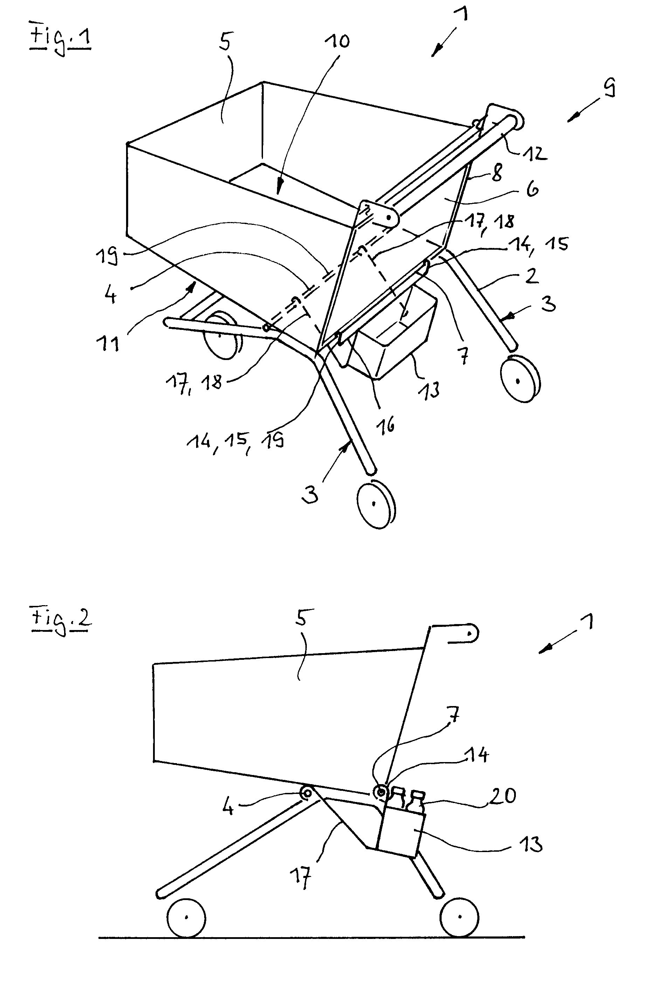

Der in Fig. 1 dargestellte Einkaufswagen 1 weist ein Fahrgestell 2 auf, das mit Hilfe von Längsholmen 3 einen Korb 5 trägt. Außerhalb des Korbes 5 ist ein nach hinten über den Korbboden 10 hinausragendes Fach 13 zur Aufnahme von Flaschen 20 ortsfest angeordnet. Am oberen hinteren Ende des Korbes 5 ist eine Schiebeeinrichtung 12 vorgesehen. Die eben genannten Bauteile des Einkaufswagens 1 sind in bekannter Weise so gestaltet, daß sich gleiche Einkaufswagen 1,1' platzsparend ineinanderschieben, also stapeln lassen. Aus diesem Grunde ist auch die Rückwand 6 des Korbes 5 schwenkbar aufgehängt und lässt sich in das Korbinnere bewegen. Das Fach 13 ist ein quaderförmiges, aus Draht gefertigtes korbartiges Gebilde, das nach oben offen ist, damit von oben her Flaschen oder Flaschengebinde 20 in das Fach 13 einstellbar sind. Das Fach 13 weist hintere Befestigungsmittel 14 und vordere Befestigungsmittel 17 auf. Die hinteren Befestigungsmittel 14 sind die Enden 15 eines an der oberen Vorderseite des Faches 13 angeordneten Querstabes 16, der die Distanz zwischen den nach oben gekrümmten Längsholmen 3 des Fahrgestelles 2 nahezu durchmisst. Die Enden 15 sind rechtwinklig nach oben gerichtet und umfassen ösenartig den hinteren unteren Korbrand 7 des Korbes 5. Der hintere untere Korbrand 7 ist gewöhnlich Bestandteil eines aus Draht bestehenden, meist geschlossenen Rahmens 8, der die Rückseite 9 des Korbes 5 einschließt. Die vorderen Befestigungsmittel 17 des Faches 13 sind zwei vom unteren vorderen Rand des Faches 13 ausgehende und in Schieberichtung (Pfeil) des Einkaufswagens 1 ansteigende Stäbe 18, siehe auch Fig. 2, die ösenartig einen Quersteg 4 umfassen, der die Längsholme 3 des Fahrgestelles 2 verbindet und zusätzlich, an der Unterseite 11 des Korbbodens 10 anliegend, zum Abstützen des Korbes 5 bestimmt ist. Als Befestigungsstellen 19 für die Befestigungsmittel 14, 17 des Faches 13 sind im Beispiel der Korb 5 und der Quersteg 4 vorgesehen.

In einer Seitenansicht und teilweise geschnitten zeigt Fig. 2 die Anordnung des Faches 13 am Einkaufswagen 1 entsprechend Fig. 1. Die vorderen Befestigungsmittel 17 des Faches 13 sind am Quersteg 4 eingehängt und befestigt, während die hinteren Befestigungsmittel 14 den unteren hinteren Korbrand 7 umfassen und durch Verklammern vor einem Lösen gesichert sind. Da die Befestigungsmittel 14, 17 ortsfest am Fach 13 angeordnet sind, ist auch das Fach 13 ortsfest am Einkaufswagen 1 befestigt. Im Fach 13 befindet sich ein Flaschengebinde 20.

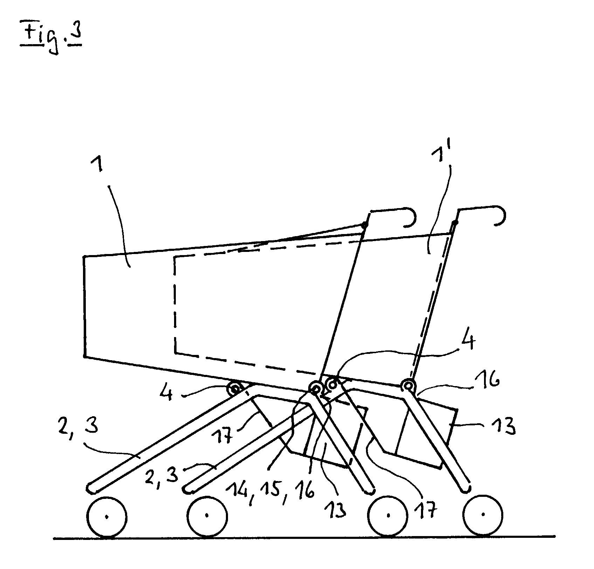

Fig. 3 zeigt zwei platzsparend ineinandergeschobene Einkaufswagen 1,1' entsprechend den Ausführungen nach Fig. 1 und 2. Die Einkaufswagen 1,1' sind nach Art der deutschen Patentschrift 31 01 844 C2 gestaltet. Aus der Zeichnung ist ersichtlich, wie die Längsholme 3 des Fahrgestelles 2 des hinteren Einkaufswagens 1' zwischen den Längsholmen 3 des vorderen Einkaufswagens 1 plaziert sind. Das Fach 13 des vorausbefindlichen Einkaufswagens 1 befindet sich zwischen den Längsholmen 3 des hinteren Einkaufswagens 1'. Der an der oberen Vorderseite des Faches 13 befindliche Querstab 16 sowie dessen rechtwinklig nach oben gerichtete Enden 15, und damit die hinteren Befestigungsmittel 14 sind außerhalb jenes Raumes angeordnet, den die Längsholme 3 eines hinteren Einkaufswagens 1' beim Zusammenschieben zweier Einkaufswagen 1,1' benötigen. Der Abstand der beiden vorderen Befestigungsmittel 17, vgl. Fig. 1, ist größer als die quer zur Schieberichtung des Einkaufswagens 1 gemessene Breite des Faches 13. In ineinandergeschobenem Zustand zweier Einkaufswagen 1,1' befindet sich demnach das Fach 13 eines vorausbefindlichen Einkaufswagens 1 zwischen den vorderen Befestigungsmitteln 17 eines hinteren Einkaufswagens 1'. Aus der Zeichnung geht schließlich hervor, dass sich die Querstege 4 der Einkaufswagen 1,1' ebenfalls außerhalb der Räume befinden, welche die Längsholme 3 beim Ineinanderschieben mehrerer Einkaufswagen 1,1' benötigen.

Alternativ ist es möglich, die vorderen und hinteren Befestigungsmittel 14,17 des Faches 13 am Korbboden 10 zu befestigen. Diese Möglichkeit bietet sich an, wenn der Korb 5, wie zumeist üblich, als Drahtgitterkonstruktion gestaltet ist. Auch eine Kombination eines dieser Merkmale mit einem der beiden in Fig. 1 bis Fig. 3 genannten Merkmale (Quersteg 4 oder unterer hinterer Korbrand 7) ist möglich.

## Patentansprüche

1. Einkaufswagen (1,1'), mit einem Fahrgestell (2), mit einem Korb (5) und mit einem außerhalb des Korbes (5) ortsfest angeordneten, zur Aufnahme von Flaschen (20) bestimmten Fach (13), das nach hinten über den Korbboden (10) hinausragt und zum Zwecke seiner Befestigung mit vorderen Befestigungsmitteln (17) ausgestattet ist, die mit dem Fahrgestell (2) verbunden sind und hintere Befestigungsmittel (14) aufweist, die zum weiteren Abstützen des Faches (13) bestimmt sind, dadurch **gekennzeichnet,** dass der Korb (5) als Befestigungsstelle (19) für die hinteren Befestigungsmittel (14) des Faches (13) vorgesehen ist.

2. Einkaufswagen nach Anspruch 1, dadurch **gekennzeichnet,** dass die hinteren Befestigungsmittel (14) am hinteren unteren Korbrand (7) befestigt sind.

3. Einkaufswagen nach Anspruch 1 oder 2, dadurch **gekennzeichnet,** dass die hinteren Befestigungsmittel (14) den hinteren Korbrand (7) ösenartig umfassen.

4. Einkaufswagen nach einem der Ansprüche 1 bis 3, dadurch **gekennzeichnet,** dass die vorderen Befestigungsmittel (17), ausgehend vom Fach (13), in Schieberichtung des Einkaufswagens (1,1') ansteigend angeordnet sind.

5. Einkaufswagen nach einem der Ansprüche 1 bis 4, dadurch **gekennzeichnet,** dass die vorderen und hinteren Befestigungsmittel (17,14) ortsfest am Fach (13) angeordnet sind.

6. Einkaufswagen nach einem der Ansprüche 1 bis 5, dadurch **gekennzeichnet,** dass der Abstand der beiden vorderen Befestigungsmittel (17) größer ist als die Breite des Faches (13).

7. Einkaufswagen nach einem der Ansprüche 1 bis 6, dadurch **gekennzeichnet,** dass in ineinandergeschobenem Zustand zweier Einkaufswagen (1,1') das Fach (13) des vorausbefindlichen Einkaufswagens (1) zwischen den vorderen Befestigungsmitteln (17) des hinteren Einkaufswagens (1') angeordnet ist.

8. Einkaufswagen nach einem der Ansprüche 1 bis 7, dadurch **gekennzeichnet**, dass die vorderen Befestigungsmittel (17) nicht am Quersteg (4) sondern am Korbboden (10) befestigt sind.

9. Einkaufswagen nach Anspruch 1 und/oder 8, dadurch **gekennzeichnet,** dass die hinteren Befestigungsmittel (14) nicht am hinteren unteren Korbrand (7) sondern am Korbboden (10) befestigt sind.

10. Einkaufswagen nach einem der Ansprüche 1 bis 9, dadurch **gekennzeichnet,** dass das Fahrgestell (2) zwei nach oben gekrümmte Längsholme (3) aufweist, die den Korb (5) tragen.
